(19) Europäisches Patentamt
European Patent Office
Office européen des brevets

(11) **EP 4 099 228 A1**

(12) **DEMANDE DE BREVET EUROPEEN**

(43) Date de publication:
**07.12.2022 Bulletin 2022/49**

(21) Numéro de dépôt: **22176506.8**

(22) Date de dépôt: **31.05.2022**

(51) Classification Internationale des Brevets (IPC):
**G06N 3/04** *(2006.01)* **G06N 3/08** *(2006.01)*

(52) Classification Coopérative des Brevets (CPC):
**G06N 3/0454; G06N 3/084; G06N 3/088;**
G06N 20/20

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **04.06.2021 FR 2105890**

(71) Demandeur: **Commissariat à l'énergie atomique et aux énergies alternatives**
**75015 Paris (FR)**

(72) Inventeurs:
• **DUBOURVIEUX, Fabian**
**91191 GIF-SUR-YVETTE Cedex (FR)**
• **LOESCH, Angélique**
**91191 GIF-SUR-YVETTE Cedex (FR)**
• **AUDIGIER, Romaric**
**91191 GIF-SUR-YVETTE Cedex (FR)**

(74) Mandataire: **Atout PI Laplace**
**Immeuble "Visium"**
**22, avenue Aristide Briand**
**94117 Arcueil Cedex (FR)**

(54) **APPRENTISSAGE AUTOMATIQUE SANS ANNOTATION AMELIORE PAR REGROUPEMENTS ADAPTATIFS EN ENSEMBLE OUVERT DE CLASSES**

(57) L'invention concerne une méthode mise en œuvre par ordinateur d'entraînement d'un moteur d'apprentissage automatique supervisé, comprenant : une initialisation du moteur d'apprentissage ; puis, de manière itérative : une extraction de caractéristiques, par le moteur d'apprentissage, d'un deuxième jeu d'entraînement non annoté, et d'un jeu de validation pré-annoté associé à un premier jeu d'entraînement pré-annoté ; une optimisation d'au moins une valeur de paramètre d'un algorithme de partitionnement de données appliqué aux caractéristiques extraites du jeu de validation, en fonction d'étiquettes associées au jeu de validation ; une application dudit algorithme de partitionnement avec l'au moins une valeur de paramètre de données aux caractéristiques extraites du deuxième jeu d'entraînement ; une annotation automatique du deuxième jeu d'entraînement, à l'aide d'une pluralité de pseudo-étiquettes ; chaque étiquette de ladite pluralité correspondant à une partition générée par ladite application ; un entraînement du moteur d'apprentissage, le deuxième jeu d'entraînement annoté.

**Fig. 2a**

EP 4 099 228 A1

**Description**

Domaine de l'invention

La présente invention concerne le domaine de l'apprentissage automatique, et plus particulièrement le domaine de l'apprentissage automatique sur un jeu de données non annotées à partir d'un jeu de données annotées source.

Etat de l'art précédent

Certains systèmes logiciels, dits de recherche d'information (en anglais « information retrieval »), permettent de rechercher, dans un ensemble de données (également appelé « galerie »), des données similaires/ressemblant à une donnée « requête », en considérant comme similaires deux éléments que l'on pourrait regrouper dans une même catégorie. Parmi eux, on peut notamment citer les systèmes de recherche d'images (en anglais « image retrieval ») dont l'objectif consiste à retourner des images similaires (donc considérées d'une même catégorie) à une image requête. D'autres exemples de systèmes de recherche d'information existent. Par exemple, les systèmes de réidentification de personnes ou d'objets consistent à renvoyer des imagettes classées des plus ressemblantes aux moins ressemblantes à l'imagette de la personne ou de l'objet requête. Les catégories en ensemble ouvert n'étant pas connues, pour trouver les images d'une même catégorie qu'une image requête, les systèmes de recherche de données peuvent effectuer un classement (en anglais « ranking ») des éléments de la galerie selon leur ressemblance par une mesure de comparaison à la donnée requête. Cette mesure de ressemblance peut également être binaire en indiquant si les images appartiennent ou non à la même catégorie que l'image requête (« vérification »). Pour que le système soit efficace, il convient de définir ce qui est ressemblant. Souvent, une mesure de similarité ou, au contraire, de distance est utilisée pour ordonner les données selon leur ressemblance à la requête. Si les systèmes de recherche d'information sont aujourd'hui principalement appliqués à des données image, ils peuvent être appliqués à tout type de données, multimédia (son, vidéo) ou non (par exemple, des données textuelles), à partir du moment où une mesure de similarité peut être établi sur les données.

Une telle mesure de similarité peut s'appliquer sur les données brutes, telles que les valeurs de luminosité des pixels d'une image ou sur des représentations de ces données brutes. Ces représentations, appelées aussi vecteurs de caractéristiques (en anglais features), est généralement de dimension inférieure à la donnée brute et est décrite dans un espace, dit espace latent, où il est plus efficace de mesurer les ressemblances des données par la proximité de leurs représentations. Ces représentations peuvent être définies a priori (par exemple, en utilisant un histogramme des couleurs pour représenter une image) ou obtenues par apprentissage automatique (en anglais machine learning). Par exemple, un moteur d'apprentissage automatique tel qu'un réseau de neurones peut transformer un vecteur d'entrées de données brutes en vecteur de sortie de caractéristiques, et les mesures de ressemblance ou de dissimilarité peuvent être réalisées sur les vecteurs de caractéristiques.

Les techniques d'apprentissage automatique, et notamment celles d'apprentissage profond (en anglais « deep learning ») se sont montrées particulièrement efficaces, pour de nombreuses tâches, comme par exemple la recherche d'images, ou la réidentification de personnes. Les techniques d'apprentissage automatique reposent sur une phase d'entrainement (en anglais « training phase ») au cours de laquelle un moteur d'apprentissage utilise un ensemble de données appelé jeu d'entraînement (en anglais « training dataset ») pour mettre au point un modèle qui extrait les représentations des données brutes. En général, ce sont les apprentissages obtenus avec le paradigme d'entrainement dit supervisé qui produisent les représentations les plus efficaces. La supervision suppose que le jeu d'entrainement est étiqueté (labellisé) : pour chaque donnée ou groupe de données, on dispose également d'une ou plusieurs étiquettes (ou labels) qui vont être utilisées lors de l'apprentissage. L'entraînement consiste alors à paramétrer le modèle pour optimiser une fonction objectif en utilisant les données et leurs étiquettes. Par exemple, dans une tâche de classification consistant à identifier des classes de données dans les données brutes (par exemple, identifier des classes d'objets dans une image), les étiquettes correspondent aux classes d'objets effectivement présentes dans chaque ensemble de données brutes, et l'entraînement peut viser à minimiser une fonction objectif représentant une différence entre des classes prédites par le modèle, et les étiquettes correspondant aux classes effectivement présentes. Si les méthodes d'apprentissage supervisé sont particulièrement efficaces, elles présentent l'inconvénient de nécessiter d'annoter les données brutes avec des étiquettes. En effet, l'annotation est souvent faite manuellement par les humains et est coûteuse car elle demande expertise et temps. Par exemple, dans une tâche de classification d'images, une annotation consistera pour un humain à visualiser chaque image, et indiquer manuellement quels sont les types d'objets présents dans l'image.

Une fois un système entraîné, il peut être utilisé, en phase d'inférence, pour effectuer des classifications en « ensemble clos » ou en « ensemble ouvert ». Dans le premier cas, toutes les images utilisées en phases d'inférence correspondent à des catégories rencontrées lors de l'entrainement. Par exemple, si on dispose d'une base d'images d'animaux dont chaque catégorie a été apprise par le modèle, et que la requête est une image de chien, le classificateur pourra classifier les objets présents dans chaque image, et ainsi retrouver les images de chiens, c'est-à-dire celles pour lesquelles le classificateur a retourné l'étiquette « chien » (qui peuvent être ordonnées par un score de confiance décroissant, si le classificateur attribue un tel score aux étiquettes). Il s'agit d'un problème avec « ensemble clos » (en anglais « closed-set ») car l'ensemble des catégories possibles des données requêtes est connue à l'avance. Pour être efficace, le système utilisera ces mêmes catégories lors de l'entrainement de son modèle. Un autre exemple de problème avec « ensemble clos » serait un système qui doit rechercher les images correspondant à un ensemble de personnes fixe et déterminé par avance.

En revanche, très souvent, on ne connait pas par avance les catégories des données ou les critères objectifs qui permettent de regrouper des données et dire qu'elles sont ressemblantes. Lorsque l'ensemble des contenus possibles des données n'est pas limité, ni connu par avance, on parle d'un problème avec une configuration d'« ensemble ouvert » (en anglais « open-set »). Les catégories sont donc différentes entre la phase d'apprentissage et la phase d'utilisation ou de test (phase d'inférence) du système. Par exemple, c'est le cas si la base d'entrainement des catégories d'animaux est partielle et que les requêtes comportent des animaux non présents dans la base d'apprentissage (Par exemple, si le jeu d'apprentissage comprend des images de chien uniquement, et qu'une requête est faite sur une image de loup, celle-ci pourra être considérée par le système comme proche de certaines images de chiens). La réidentification de personnes dans les images est un cas typique d'ensemble ouvert. Les personnes vues lors de la phase d'entrainement ne sont pas les mêmes que celles qui seront vues par le système en phase d'inférence, ni même lors de son déploiement sur un site quelconque.

Une autre problématique mal résolue par les systèmes d'apprentissage automatique supervisé est celle dite du changement de domaine. Cette problématique survient lorsque, entre les phases d'apprentissage et d'inférence d'un système d'apprentissage automatique se produisent des changements ou distorsions au sein des données brutes induits, par exemple, par des modifications de l'acquisition de ces données brutes. Par exemple, le système de réidentification entraîné avec des images d'un réseau de caméras sur un site donné (phase d'apprentissage), peut être déployé sur un nouveau site équipé d'un réseau de caméras de sensibilité différente, avec des points de vue différents (phase d'inférence). Il se peut qu'il y ait des acquisitions sous de nouvelles conditions (en extérieur plutôt qu'en intérieur, la nuit au lieu du jour, sous un jour plus ou moins lumineux) qui modifient la luminosité de la scène dans laquelle le système devra réidentifier les personnes. De même, des images acquises en été avec des personnes portant des vêtements plus courts et colorés (phase d'apprentissage) ne permettront pas d'apprendre à bien réidentifier les personnes en hiver lorsque beaucoup de personnes portent des vêtements plus longs et sombres (phase d'inférence). Dans la problématique de changement de domaine, on parle de domaine source pour le domaine d'acquisition des données d'entraînement (phase d'entrainement), et de domaine cible pour le domaine d'acquisition des données d'utilisation ou de test (phase d'inférence).

Les représentations ou distances apprises dans le domaine source ne sont souvent pas performantes lors de leur application dans le domaine cible, la perte de performance étant généralement fonction de la différence entre les domaines (en anglais « *domain discrepancy* »).

Selon l'état de l'art, cette perte de performance peut être traitée de différentes manières, dont la plus commune consiste à effectuer une annotation manuelle et un apprentissage supervisé spécifique dans le domaine cible, ce qui induit un coût supplémentaire à chaque déploiement dans un nouvel environnement, ou domaine. Ceci peut s'avérer problématique, notamment si une solution d'apprentissage doit être déployée dans de nombreux domaines. Par exemple, si une solution de réidentification doit être déployée dans de nombreux environnements différents, dont chacun forme un nouveau domaine car les données sont issues de caméras œuvrant dans des conditions différentes, annoter un nouveau jeu d'apprentissage pour chaque déploiement de la solution peut s'avérer trop complexe et coûteux.

Pour éviter ce coût additionnel d'annotation dans chaque nouveau domaine, des techniques dites d'adaptation de domaine non supervisée (en anglais « Unsupervised Domain Adaptation, UDA ») peuvent être utilisées. Elles visent à dépasser la différence entre les domaines, autrement dit, à mieux gérer les biais que pourraient présenter les jeux de données sources et cibles pour optimiser les performances sur le domaine cible (et éventuellement sur le domaine source également). Ces méthodes ont l'avantage d'être non-supervisées, c'est-à-dire de ne nécessiter aucune étiquette, et donc aucune annotation, dans le domaine cible.

Il existe trois grandes familles de méthodes d'adaptation de domaine non supervisée.

La première stratégie consiste à aligner les données brutes en modélisant les distorsions qu'elles subissent pour passer d'un domaine à l'autre. Par exemple, cette méthode peut consister à modifier les données du domaine cible pour les rapprocher des données rencontrées dans le domaine source. Par exemple, cela peut consister en une correction de la luminosité ou du contraste d'images capturées par des caméras dans différentes conditions, ou appliquer un transfert de style sur des images. Cette stratégie présente l'inconvénient d'être limitée à des cas d'utilisation dans lesquels une transformation peut être explicitement définie entre le domaine source et le domaine cible, ce qui n'est souvent pas le cas.

La deuxième stratégie consiste à aligner les représentations de ces données pour filtrer les distorsions entre le domaine source et le domaine cible. Ici, la transformation entre les données des deux domaines s'effectue donc, non pas sur les données brutes, mais sur les données transformées par le moteur d'apprentissage. Comme la première stratégie, cette stratégie présente l'inconvénient qu'un alignement des données entre les deux domaines n'est pas toujours possible.

La troisième stratégie consiste à pseudo-annoter les données du domaine cible grâce à un modèle appris et fonctionnel dans un domaine source. En pratique, cette stratégie consiste donc à effectuer l'apprentissage d'un modèle (par exemple, un réseau de neurones) dans le domaine source, puis utiliser ce modèle pour transformer les données brutes du domaine cible en vecteurs de caractéristiques. Il est alors possible d'identifier des caractéristiques communes ou proches dans les données du domaine cible, qui seront associées à une même pseudo-étiquette. Le terme pseudo-étiquette signifie ici que l'on a détecté que certaines caractéristiques du domaine cible doivent correspondre à un même type, représenté par la pseudo-étiquette, mais que, en l'absence d'une annotation humaine, il est impossible de savoir à quelle classe correspondent ces données ni de s'assurer qu'elles correspondent bien à un même type. Par exemple, si le domaine source comprend des images de chien et de chats, et le domaine cible des images de loup, l'application du modèle entraîné sur le modèle source au modèle cible devrait permettre d'identifier un groupe de caractéristique, associé à une pseudo-étiquette correspondant aux images de loup, mais il ne sera pas possible, sans intervention humaine, d'étiqueter ces images comme « loup ».

Cette stratégie, présente l'avantage, contrairement aux deux premières, d'être applicable sans intervention humaine sur tout domaine cible.

Une méthode de pseudo-annotation (en anglais « pseudo-labeling ») dans un problème à ensemble ouvert est généralement basée sur un algorithme de partitionnement de données (en anglais « clustering ») qui va regrouper les représentations des données cibles de manière non-supervisée en plusieurs clusters, et attribuer à chaque cluster une pseudo-étiquette. Chaque algorithme est associé à un ou plusieurs paramètres (ou hyperparamètres). Différentes méthodes de partitionnement de données, associées à différents hyperparamètres, peuvent être utilisées.

Par exemple, la méthode appelée DBSCAN (Density-Based Spatial Clustering of Application with Noise, décrit par Ester, M., Kriegel, H. P., Sander, J., & Xu, X. (1996, August). A density-based algorithm for discovering clusters in large spatial databases with noise. In Kdd (Vol. 96, No. 34, pp. 226-231)) peut être utilisée, pour laquelle deux hyperparamètres doivent être fixés (le nombre minimal d'éléments pour former un cluster et la distance maximale entre deux éléments d'un même cluster).

La méthode dite des K-moyennes (en anglais « K-means »), pour laquelle l'hyperparamètre K, représentant un nombre cible de clusters est à choisir, peut également être utilisé.

Dans les méthodes de pseudo-annotations selon l'état de l'art, ces hyperparamètres de partitionnement doivent donc être choisis manuellement, ce qui implique une intervention humaine, qui peut être longue, puisque qu'il n'existe dans l'état de l'art aucune manière de prévoir a priori quelles sont les valeurs optimales d'hyperparamètres. Ceux-ci ne peuvent donc être déterminés par un opérateur humain, que par une phase longue d'essais et erreurs.

De plus, on observe que les systèmes peuvent être très sensibles à ces choix d'hyperparamètres, et que les hyperparamètres optimaux peuvent être très variables en fonction des domaines. Dit autrement, les paramètres optimaux de partitionnement de données pour une méthode de pseudo-annotation seront généralement différents selon les modèles cibles, avec des pertes de performances importantes si des paramètres non-optimaux sont choisis. Il n'est donc en général pas possible d'identifier des hyperparamètres optimaux pour tous les domaines cibles, ce qui implique de ré-effectuer le travail d'identification des paramètres sur chaque domaine cible.

On pourrait également utiliser un paramètre par défaut, obtenu par exemple lors d'une expérience antérieure sur un autre problème cross-domaine, mais en prenant le risque que ce paramètre ne soit pas du tout adapté à la tâche inter-domaine actuelle.

Il y a donc besoin d'un apprentissage automatique d'un moteur d'apprentissage automatique supervisé sur un domaine cible en ensemble ouvert, utilisant une technique de pseudo-annotation par partitionnement de données, dans laquelle des paramètres du partitionnement de données optimisés pour le domaine cible sont automatiquement déterminés.

Résumé de l'invention

A cet effet, l'invention a pour objetcune méthode mise en œuvre par ordinateur d'entraînement d'un moteur d'apprentissage automatique supervisé, comprenant : une initialisation du moteur d'apprentissage ; puis, une pluralité d'itérations des étapes suivantes : une extraction de caractéristiques, par le moteur d'apprentissage, d'un deuxième jeu d'entraînement non annoté, et d'un jeu de validation pré-annoté associé à un premier jeu d'entraînement pré-annoté ; une optimisation d'au moins une valeur de paramètre d'un algorithme de partitionnement de données appliqué aux caractéristiques extraites du jeu de validation, en fonction d'étiquettes associées au jeu de validation ; une application dudit algorithme de partitionnement avec l'au moins une valeur de paramètre de données aux caractéristiques extraites du deuxième jeu d'entraînement ; une annotation automatique du deuxième jeu d'entraînement, à l'aide d'une pluralité d'étiquettes, ou pseudo-étiquettes, chaque étiquette de ladite pluralité correspondant à une partition générée par ladite application ; un entraînement du moteur d'apprentissage, avec le deuxième jeu d'entraînement annoté.

Avantageusement, ledit entraînement du moteur d'apprentissage est effectué avec le premier jeu d'entraînement pré-annoté, et le deuxième jeu d'entraînement annoté.

Avantageusement, ladite initialisation consiste en un entraînement préalable du moteur d'apprentissage à partir dudit premier jeu d'entraînement pré-annoté.

Avantageusement, l'entraînement préalable minimise une fonction de perte comprenant un terme d'apprentissage de similarité.

Avantageusement, ladite optimisation de l'au moins une valeur de paramètre d'un algorithme de partitionnement de données consiste à calculer l'au moins une valeur de paramètre améliorant la similarité entre les partitions générées par l'algorithme de partitionnement, et les partitions induites par les étiquettes associées au jeu de validation.

Avantageusement, l'entraînement optimise un terme d'apprentissage de similarité comprenant : un terme de classification sur le deuxième jeu d'entraînement ; un terme de similarité sur le deuxième jeu d'entraînement.

Avantageusement, le terme d'apprentissage de similarité comprend également : un terme de classification sur le premier jeu d'entraînement ; un terme de similarité sur le premier jeu d'entraînement.

Avantageusement, l'entraînement minimise une fonction de perte comprenant un terme d'alignement entre le premier jeu d'entraînement et le deuxième jeu d'entraînement.

Avantageusement, la method comprend une étape de pondération des poids d'échantillons du jeu de validation pour ladite optimisation de l'au moins une valeur de paramètre de l'algorithme de partitionnement de données, pour affecter auxdits échantillons du jeu de validation un poids croissant en fonction de leur similarité aux échantillons du deuxième jeu d'entraînement.

Avantageusement, ladite étape de pondération comprend : une séparation du jeu de validation en plusieurs sous-ensembles ; une affectation d'un coefficient de pondération à chaque sous-ensemble, en fonction d'une indication d'une probabilité d'appartenance d'une matrice de similarités deux à deux du sous-ensemble au premier ou au deuxième jeu d'entraînement, ladite probabilité étant calculée par des réseaux antagoniste génératifs ; pour chaque valeur candidate de paramètres de partitionnement d'un ensemble de valeurs candidates : le partitionnement de chaque sous-ensemble le calcul d'un indice de qualité du partitionnement pour chaque sous ensemble ; le calcul d'un indice de qualité global du partitionnement, comme une moyenne des indices de qualité du partitionnement pour chaque sous ensemble pondérée par les coefficients de pondération.

L'invention a également pour objet un moteur d'apprentissage automatique supervisé entraîné par la méthode selon l'un des modes de réaliation de l'invention.

L'invention a également pour objet une méthode d'utilisation d'un moteur d'apprentissage automatique supervisé selon l'un des modes de realization de l'invention, comprenant :la réception d'un échantillon de données brutes ; l'extraction, par ledit moteur, de caractéristiques à partir de cet échantillon de données brutes.

L'invention a également pour objet un produit programme d'ordinateur comprenant des instructions de code informatique qui, lorsque le programme est exécuté sur un ordinateur, conduisent celui-ci à exécuter la méthode selon l'un des modes de réalisation de l'invention.

L'invention a également pour objet un système de traitement de données comprenant un processeur configuré pour mettre en œuvre la méthode selon l'un des modes de réalisation de l'invention.

L'invention a également pour objet un support d'enregistrement lisible par ordinateur comprenant des instructions qui, lorsqu'elles sont exécutées par un ordinateur, conduisent celui-ci à mettre en œuvre la méthode selon l'un des mdoes de réalisation de l'invention.

D'autres caractéristiques, détails et avantages de l'invention ressortiront à la lecture de la description faite en référence aux dessins annexés donnés à titre d'exemple et qui représentent, respectivement :

Figure 1, un exemple de méthode mise en œuvre par ordinateur d'entrainement d'un moteur d'apprentissage automatique supervisé dans un ensemble de modes de mise en œuvre de l'invention ;

Figure 2a, un exemple de méthode mise en œuvre par ordinateur d'entrainement d'un moteur d'apprentissage automatique supervisé dans un ensemble de modes de mise en œuvre de l'invention ;

Figure 2b, un exemple de méthode mise en œuvre par ordinateur d'entrainement d'un moteur d'apprentissage automatique supervisé dans un ensemble de modes de mise en œuvre de l'invention, utilisant un alignement de données entre un domaine cible et un domaine source ;

Figure 2c, un exemple de méthode mise en œuvre par ordinateur d'entrainement d'un moteur d'apprentissage automatique supervisé dans un ensemble de modes de mise en œuvre de l'invention, utilisant une pondération de données du domaine source en fonction de leur ressemblance avec les données du domaine cible ;

Figure 3, un exemple de méthode mise en œuvre par ordinateur d'utilisation d'un moteur d'apprentissage automatique supervisé dans un ensemble de modes de mise en œuvre de l'invention ;

Figure 4, un exemple d'évolution d'une mesure de calcul d'une qualité de partitionnement de données en fonction d'un nombre d'itérations d'entraînement, dans un ensemble de modes de réalisation de l'invention.

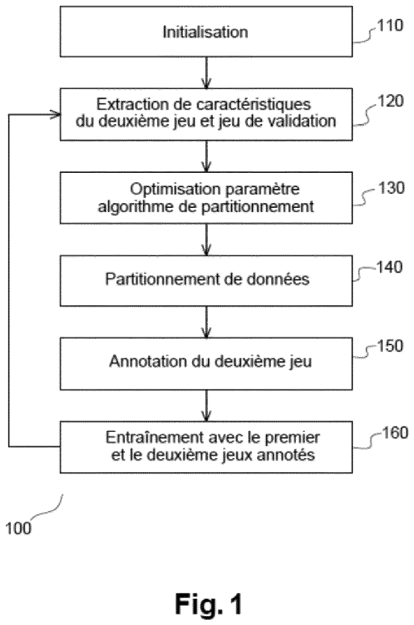

La figure 1 représente un exemple de méthode mise en œuvre par ordinateur d'entrainement d'un moteur d'apprentissage automatique supervisé dans un ensemble de modes de mise en œuvre de l'invention.

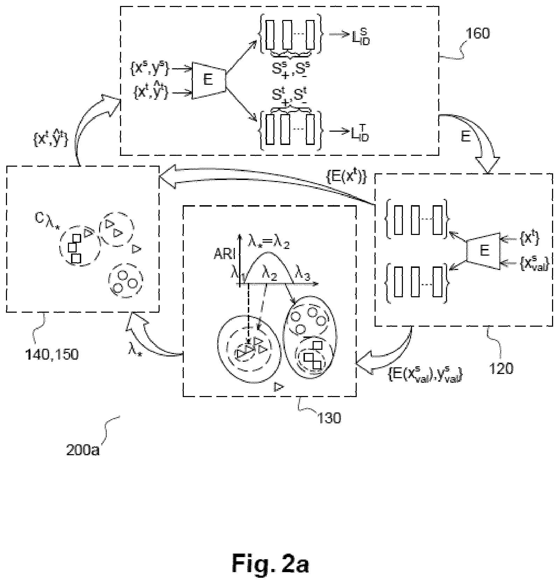

La figure 2a représente également un exemple de méthode mise en œuvre par ordinateur d'entrainement d'un moteur d'apprentissage automatique supervisé dans un ensemble de modes de mise en œuvre de l'invention.

Les représentations des figures 1 et 2a sont complémentaires : la figure 1 représente l'apprentissage sous forme d'un diagramme de flux, alors que la figure 2a représente certaines étapes de l'apprentissage, en ajoutant une représentation symbolique de différents éléments intervenant dans la méthode.

De manière générale, la méthode selon l'invention sera décrite via des exemples relatifs à la classification, et la recherche de similarités dans des images. Cependant, l'invention est plus généralement applicable à tout type de données sur lesquelles une classification et/ou des mesures de similarités peuvent être effectuée,

Les méthodes 100, 200a sont des méthodes mises en œuvre par ordinateur d'entraînement d'un moteur d'apprentissage automatique supervisé. Un moteur ou algorithme d'apprentissage automatique supervisé (en anglais « supervised machine learning engine ») est basé sur un modèle permettant de prédire des données de sortie à partir de données d'entrées, et pouvant être entraîné avec un jeu d'entraînement comportant, pour un ensemble de données d'entrée, des sorties désirées. Le moteur d'apprentissage automatique supervisé adapte alors, dans une phase dite d'entraînement, les paramètres du modèle pour prédire, à partir des entrées du jeu d'entraînement, des sorties aussi proches que possible des sorties désirées, par exemple en minimisant une fonction de perte. Cet entraînement peut être différent selon le type de moteur d'apprentissage automatique supervisé utilisé. Par exemple, dans le cas d'un réseau de neurones artificiel, plusieurs itérations de rétropropagation du gradient de la fonction de perte peuvent être appliquées. Une fois entraîné, le moteur d'apprentissage automatique supervisé peut prédire, à partir de nouvelles données d'entrée, les sorties correspondantes.

Selon différents modes de réalisation de l'invention, différents moteurs d'apprentissage supervisés peuvent être utilisés. Par exemple, un moteur basé sur un réseau de neurones, ou des forêts aléatoires peut être utilisé. Parmi les réseaux de neurones, les réseaux de neurones convolutionnels et les réseaux de neurones récurrents sont particulièrement efficaces pour traiter des données multimédia, notamment des données images.

Le moteur d'apprentissage automatique supervisé est configuré pour obtenir, pour chaque ensemble de données d'entrées, un ensemble de caractéristiques en sortie, par exemple sous la forme d'un vecteur de caractéristiques. Une similarité entre différents ensembles de données d'entrée peut ensuite être déterminée, à partir des caractéristiques en sortie.

Un moteur d'apprentissage automatique supervisé selon l'invention peut être appliqué à tout type de données pour lequel il est possible d'évaluer des similarités entre différents ensembles de données.

Par exemple, il peut être appliqué à des données textuelles, ou des données multimédia. Il peut ainsi être appliqué à des données image, son ou vidéo.

Par exemple, dans le cas de données images, une image peut être fournie en entrée du moteur d'apprentissage automatique supervisé (par exemple, un réseau de neurones artificiel ou réseau de neurones convolutionnel) qui en extrait des caractéristiques, par exemple sous la forme d'un vecteur. Les caractéristiques issues de deux images peuvent ainsi être comparées, pour déterminer un niveau de similarité entre les deux images.

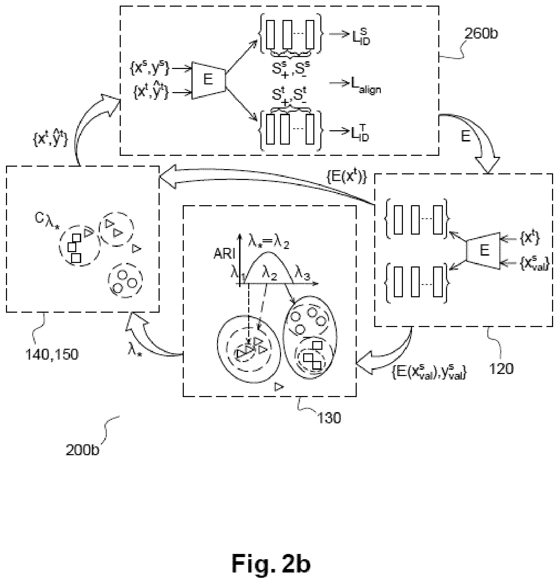

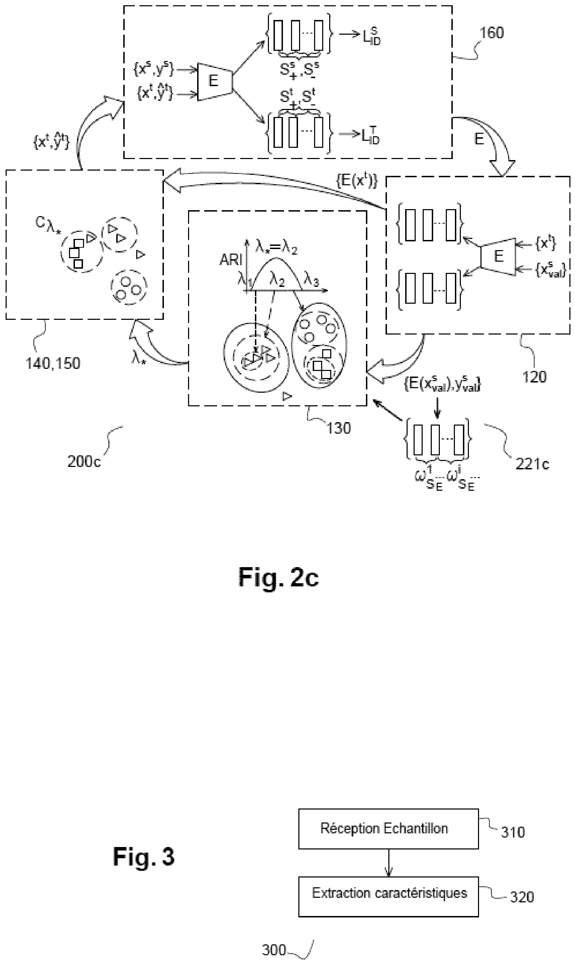

Le moteur d'apprentissage automatique supervisé, ou encodeur est noté « E » sur les figures 2a, 2b, 2c.

La méthode 100 (ainsi que les méthodes 200a, 200b, 200c, bien que cette étape ne soit pas représentée sur les figures 2a, 2b, 2c) comprend une première étape 110 d'initialisation du moteur d'apprentissage.

Selon différents modes de réalisation de l'invention, différentes initialisations peuvent être utilisées. Par exemple, l'initialisation peut être une initialisation aléatoire, ou une initialisation par transfert d'un apprentissage, par exemple un apprentissage de classification.

Dans un ensemble de modes de réalisation de l'invention, ladite initialisation consiste en un entraînement préalable du moteur d'apprentissage à partir dudit premier jeu d'entraînement pré-annoté. Le premier jeu pré-annoté correspond ici au domaine source, c'est-à-dire au domaine d'entraînement initial dans lequel des données annotées sont disponibles.

Le premier jeu d'entraînement pré-annoté, noté $D^S$, comprend donc des données brutes, notées $x^S$, et des étiquettes correspondantes, notées $y^S$. L'ensemble du premier jeu d'entraînement peut donc être noté $\{x^S, y^S\}$. Par exemple, les données brutes $x^S$ peuvent être des images, et les étiquettes $y^S$ des indications des classes d'objets présentes dans chaque image. L'entraînement consiste donc à modifier les paramètres du moteur d'apprentissage E (par exemple, les poids et biais de connexions synaptiques si E est un réseau de neurones artificiels) pour prédire, à partir des données brutes $x^S$ du premier jeu, des données de sorties aussi cohérentes que possible avec les étiquettes $y^S$. L'objectif est d'obtenir une représentation des données pertinente afin de mesurer la similarité des images en termes de catégorie en ensemble ouvert. Pour apprendre cette représentation, on peut par exemple, contraindre cette représentation à classifier les objets présents dans les données brutes pour aboutir à des classes aussi proches que possible des classes définies par les étiquettes $y^S$. Ou bien procéder par apprentissage de métrique, en apprenant un espace de représentation qui rapproche les représentations d'images d'une même classe. Pour cela, une fonction de perte est définie, et l'entraînement consiste à modifier les paramètres du moteur d'apprentissage, pour minimiser progressivement la fonction de perte. Le moteur d'apprentissage E est également appelé « encodeur », car il encode les données brutes en entrée en des caractéristiques dans un espace latent. Dans le cadre d'un système de recherche, cet espace de représentation est utilisé afin de mesurer en ensemble ouvert la similarité d'une image requête à d'autres images.

Dans un ensemble de modes de réalisation de l'invention, l'entraînement préalable minimise une fonction de perte comprenant un terme d'apprentissage de similarité. Le terme d'apprentissage de similarité sur le premier jeu de données sera noté $L_{ID}^S$.

Dans un ensemble de modes de réalisation de l'invention, le terme d'apprentissage de similarité $L_{ID}^S$ sur le premier jeu de données comprend un terme de classification sur le premier jeu de données, noté $L_{cls}^S$. Ce terme représente la tendance du moteur d'apprentissage à classifier les données d'entrée sur des classes éloignées des étiquettes correspondant aux données dans le jeu d'entraînement.

Par exemple, un terme de classification peut être défini par le terme suivant :

$$L_{cls} = -\sum_{i=1}^{N} y_i \times log(p_i)$$

Avec :

$$p_i = \frac{exp\left(W_{y_i}E(x_i)\right)}{\sum_{k=1}^{M} exp\left(W_k E(x_i)\right)}$$

Où :

- N représente le nombre d'échantillons du jeu d'entraînement ;
- i représente l'indice d'un échantillon du jeu d'entraînement, comportant un ensemble de données brutes $x_i$ (par exemple, une image), et les étiquettes $y_i$ associées (par exemple, les classes présentes dans l'image) ;
- Un étage de classification est défini en sortie du modèle par les paramètres $W = [W_1 \dots W_M]$, où M correspond au nombre d'étiquettes (ou pseudo-étiquettes) différentes utilisées pour la classification ;
- Le terme $E(x_i)$ représente l'application du moteur d'apprentissage (ou encodeur) à l'ensemble de données brutes d'entrée $x_i$ par exemple le vecteur de caractéristiques obtenu par application de l'encodeur E aux données brutes $x_i$ de l'échantillon i.

Le terme $L_{cls}$ ainsi défini est donc d'autant plus élevé, que l'application de l'encodeur aux données brutes $x_i$ d'un échantillon fournit des caractéristiques éloignées des caractéristiques attendues pour classifier l'échantillon dans les classes définies par les étiquettes $y_i$. La minimisation d'une fonction de perte comportant ce terme conduit donc à entraîner le moteur d'apprentissage E à classifier les données du jeu d'entraînement aussi correctement que possible.

La notation $L_{cls}^S$ signifie que le terme $L_{cls}$ est appliqué aux échantillons du premier jeu d'entraînement $D^S$.

Le terme de classification présenté ci-dessus est fourni à titre d'exemple uniquement, et l'invention est applicable à d'autres termes de classification, dont la minimisation conduit à entraîner le moteur d'apprentissage à classifier aussi correctement que possible les données d'entrée.

Dans un ensemble de modes de réalisation de l'invention, le terme d'apprentissage de similarité $L_{ID}^S$ comprend un terme de similarité de type triplet, généralement noté $L_{tri}$, son application sur le premier jeu de données étant notée $L_{tri}^S$. Ce terme représente la capacité du moteur d'apprentissage à affecter des caractéristiques similaires aux échantillons d'une même classe, et des caractéristiques dissimilaires à des échantillons appartenant à des classes différentes. Dans d'autres modes de réalisation de l'invention, le terme de similarité de type triplet peut être remplacé par d'autres termes de perte, tels qu'une perte de vérification (en anglais verification loss), ou une perte contrastive (en anglais constrastive loss).

Dans un ensemble de modes de réalisation de l'invention, le terme de similarité est une perte dite « perte triplet » (en anglais « triplet loss », et définie par exemple dans Hermans, A., Beyer, L., & Leibe, B. (2017). In defense of the triplet loss for person re-identification. arXiv preprint arXiv:1703.07737, et définie par l'équation:

$$L_{tri} = \sum_{i=1}^{N} max\left(0, \left\|E(x_i) - E(x_{p_i})\right\|_2 - \left\|E(x_i) - E(x_{n_i})\right\|_2 + m\right)$$

Où, en plus des notations introduites pour le terme de classification $L_{cls}$ :

- $x_{pi}$ et $x_{ni}$ sont respectivement les « plus mauvais positif », et plus « mauvais négatif », c'est-à-dire que $x_{pi}$ est, parmi tous les échantillons classifiés dans la même classe que l'échantillon $x_i$, celui ayant le plus de caractéristiques différentes à l'issue de l'encodage, et $x_{ni}$ est, parmi tous les échantillons classifiés dans la même classe que l'échantillon $x_i$, celui ayant le plus de caractéristiques communes à l'issue de l'encodage ;
- $\| \|_2$ est une distance euclidienne ;
- $\|E(x_i) - E(x_{pi})\|_2$ représente ainsi la distance la plus importante, pour un échantillon d'indice i, entre les caractéristiques $E(x_i)$ issues de l'encodage de ses données brutes, et les caractéristiques $E(x_{pi})$ issues de l'encodage d'un échantillon d'une la même classe ;
- $\|E(x_i) - E(x_{ni})\|_2$ représente ainsi la distance la plus faible, pour un échantillon d'indice i, entre les caractéristiques $E(x_i)$ issues de l'encodage de ses données brutes, et les caractéristiques $E(x_{ni})$ issues de l'encodage de d'un échantillon n'appartenant pas à une même classe ;
- m correspond au paramètre (fixé) de marge.

L'entraînement visant à minimiser cette perte de triplet $L_{tri}$ vise donc à minimiser la distance, à l'issue de l'encodage, entre les caractéristiques d'un échantillon et celles des autres échantillons de la même classe, et maximiser la distance, à l'issue de l'encodage, entre les caractéristiques d'un échantillon et celles des échantillons n'appartenant pas à la même classe. Ce terme de la fonction de perte vise donc à homogénéiser les caractéristiques des échantillons ayant des classes en commun, ce qui permet donc de rendre les mesures de similarités plus efficaces à l'issue de l'encodage.

Une fonction de perte définie par un terme d'apprentissage de similarité comprenant à la fois un terme de classification, et un terme de similarité de type triplet permet donc en même temps de s'assurer que le moteur d'apprentissage supervisé apprend une représentation précise des données, et permet une bonne évaluation de la similarité entre les différentes données rencontrées.

Une fois l'initialisation du moteur d'apprentissage effectuée à, la méthode 100 comprend une pluralité d'itérations d'étapes faisant intervenir un deuxième jeu d'entraînement. Ces étapes 120, 130, 140, 150, 160 ou 260b, sont également représentées sur les figures 2a, 2b et 2c.

Chaque itération comprend une étape 120 d'extraction de caractéristiques, par le moteur d'apprentissage, d'un deuxième jeu d'entraînement non annoté, et d'un jeu de validation pré-annoté associé au premier jeu d'entraînement.

Le deuxième jeu d'entraînement, noté $D^T$, correspond en pratique au domaine cible. De manière générale, le deuxième jeu d'entraînement peut donc comprendre des données de même type que le premier jeu d'entraînement, mais issues d'une autre source. Par exemple, les premier et deuxième jeux d'entraînement peuvent comprendre des images de même format (même résolution, même espace colorimétrique, même profondeur de pixel), mais issues d'une prise d'images différente (par exemple, de deux systèmes de caméra différents, ou d'images prises à différents moments de la journée, ou encore différents moments de l'année).

Les données du deuxième jeu d'entraînement sont non annotées, c'est-à-dire que le deuxième jeu d'entraînement est formé uniquement de données brutes $x^t$, sans étiquette associée.

Le jeu de validation pré-annoté associé au premier jeu d'entraînement est noté $D_{val}^S$. De manière classique, ce jeu de validation peut être lié au premier jeu d'entraînement par une partition d'un jeu de données initial. Ainsi, un jeu de données initial comprenant des données brutes et des étiquettes associées peut être séparé en deux partitions, de taille égale ou non : le premier jeu d'entraînement $D^s$, et le jeu de validation $D_{val}^S$. Ainsi, le premier jeu d'entraînement $D^s$, et le jeu de validation $D_{val}^S$ correspondent tous deux à des données annotées du domaine source, et comprennent donc normalement des données de même type. Le jeu de validation pré-annoté $D_{val}^S$ est composé de données brutes

$x_{val}^{S}$, et d'étiquettes associées $y_{val}^{S}$.

L'étape 120 consiste ainsi à appliquer le moteur d'apprentissage automatique, ou encodeur, aux données brutes $x^t$ du deuxième jeu d'entraînement $D^T$, afin d'en extraire des caractéristiques $E(x^t)$, et aux données brutes $x_{val}^{S}$ du jeu de validation, afin d'en extraire des caractéristiques $E(x_{val}^{S})$.

Chaque itération comprend ensuite une étape 130 d'optimisation d'au moins une valeur de paramètre d'un algorithme de partitionnement de données appliqué aux caractéristiques extraites du jeu de validation $D_{val}^{S}$, c'est-à-dire les caractéristiques $E(x_{val}^{S})$, en fonction d'étiquettes associées au jeu de validation, c'est-à-dire les étiquettes $y_{val}^{S}$.

Une telle optimisation de paramètres permet d'identifier les paramètres fournissant les partitions les plus cohérentes avec les étiquettes. De plus, réaliser cette optimisation sur le jeu de validation $D_{val}^{S}$ permet de disposer de données étiquetées cohérentes avec les données d'entraînement.

Selon différentes modes de réalisation de l'invention, différents algorithmes de partitionnement de données peuvent être appliqués, associés à différents paramètres. Par exemple, peuvent être utilisés les algorithmes avec les paramètres suivants :

- DBSCAN, avec deux paramètres : nombre minimal d'éléments pour former un cluster et la distance maximale entre deux éléments d'un même cluster ou sa variante HDBSCAN ;
- Regroupement Hiérarchique (en anglais Agglomerative Clustering), avec un paramètre : la distance maximale entre deux éléments d'un même cluster ;
- K-moyennes, avec un paramètre : le nombre cible de clusters.

De manière générale, le ou les paramètres des algorithmes de partitionnement pourront être appelés « hyperparamètres » et notés $\lambda$. L'étape 130 vise à optimiser ces paramètres, les paramètres optimisés étant notés $\lambda_*$.

Dans un ensemble de modes de réalisation de l'invention, l'optimisation consiste à calculer au moins une valeur de paramètre améliorant la similarité entre les partitions générées par l'algorithme de partitionnement, et les partitions induites par les étiquettes associées au jeu de validation.

Dit autrement, cette étape consiste à définir les paramètres optimisés $\lambda_*$ qui permettent de générer des partitions aussi proches que possible, sur le jeu de validation, que celles induites par les étiquettes, c'est-à-dire que les partitions de caractéristiques $E(x_{val}^{S})$ correspondent autant que possible à des partitions définies par les étiquettes $y_{val}^{S}$, pour lesquelles on considère qu'une classe correspond à une partition. La partition définie par l'application de l'algorithme aux $E(x_{val}^{S})$ sera notée $\Sigma_\lambda$, et la partition définie par les étiquettes $y_{val}^{S}$ sera notée $\Sigma_y$.

Dans un ensemble de modes de réalisation de l'invention, l'étape 130 consiste plus particulièrement à maximiser une mesure dite ARI (de l'anglais « Adjusted Random Index », en français « Indice Aléatoire Ajusté »). La métrique ARI est définie par :

$$\mathrm{ARI} = \frac{\binom{N_{val}^{S}}{2}(a+d) - [(a+b)(a+c)+(c+d)(b+d)]}{\binom{N_{val}^{S}}{2}^2 - [(a+b)(a+c)+(c+d)(b+d)]},$$

Où :

- $N_{val}^{S}$ est le nombre d'éléments du jeu de validation source utilisés pour l'optimisation ; $a$ est le nombre de paires d'éléments qui se situent dans la même partition dans $\Sigma_\lambda$, et dans la même partition dans $\Sigma_y$ ;
- $b$ est le nombre de paires d'éléments qui se situent dans une partition différente dans $\Sigma_\lambda$, et dans une partition

différente dans $\Sigma_y$ ;

- $c$ est le nombre de paires d'éléments qui se situent dans la même partition dans $\Sigma_\lambda$, et dans une partition différente dans $\Sigma_y$ ;
- $d$ est le nombre de paires d'éléments qui se situent dans une partition différente dans $\Sigma_\lambda$, et dans la même partition dans $\Sigma_y$.

Maximiser la mesure d'ARI revient donc à identifier les paramètres $\lambda_*$, pour lesquels les caractéristiques $E(x_{val}^S)$ résultant de l'application du moteur d'apprentissage automatique supervisé aux données brutes $x_{val}^S$ du jeu de validation se retrouveront autant que possible dans les mêmes partitions que les éléments de ayant des étiquettes $y_{val}^S$ de même classe.

La métrique ARI présente l'avantage de ne pas dépendre du nombre de classe ni du nombre d'éléments. Cependant, toute métrique permettant d'aligner les partitions issues de l'algorithme avec les partitions définies par les étiquettes peut être utilisé. Par exemple, la métrique NMI (de l'anglais « Normalized Mutual Information », signifiant « Information Mutuelle Normalisée ») peut être utilisée.

Quelle que soit la métrique utilisée, les paramètres $\lambda_*$ optimisant la métrique peuvent être définis de différentes manières. Par exemple, l'ensemble des combinaisons de paramètres dans un espace de paramètres peut être testé de manière exhaustive. Cet ensemble (fini) de valeurs à tester afin de déterminer $\lambda_*$ peut être défini comme une grille de valeurs pré-sélectionnées (anglais Grid Search) ou par un algorithme de recherche d'hyperparamètres comme la recherche bayésienne (en anglais Bayesian Search).

Dans un ensemble de modes de réalisation de l'invention, l'étape 130 est réalisée sur l'ensemble des éléments de l'ensemble du jeu de validation $D_{val}^S$. L'étape 130 peut également être réalisée sur un sous-ensemble uniquement du jeu de validation, comme par exemple expliqué dans les modes de réalisation décrits à la figure 2c.

Chaque itération comprend ensuite une étape 140 d'application de l'algorithme de partitionnement avec l'au moins une valeur de paramètre de données aux caractéristiques extraites du deuxième jeu d'entraînement.

Cette étape consiste donc à appliquer l'algorithme de partitionnement avec le ou les paramètres optimisés, au deuxième jeu d'entraînement $D^T$, et plus spécifiquement aux caractéristiques $E(x^t)$ résultant de l'encodage des données brutes $x^t$. Ceci permet de partitionner les éléments du deuxième jeu d'entraînement $D^T$ en une pluralité de partitions. Les partitions tendent à regrouper les éléments ayant des caractéristiques proches.

Chaque itération comprend ensuite une étape 150 d'annotation automatique du deuxième jeu d'entraînement, à l'aide d'une pluralité d'étiquettes, chaque étiquette de ladite pluralité correspondant à une partition générée par ladite application.

Cette étape, dite de pseudo-annotation, consiste à affecter des étiquettes, appelées également pseudo-étiquettes, aux éléments de chaque partition du deuxième jeu d'entraînement. En effet, chaque partition est supposée contenir des éléments ayant des caractéristiques proches, et donc appartenant à une même classe, mais sans pouvoir indiquer de quelle classe il s'agirait. Une pseudo-étiquette est donc définie pour chaque partition, et associée à chaque élément de la partition, ce qui permettra lors de la prochaine itération d'entraînement d'indiquer les éléments qui doivent appartenir à la même classe. Les données brutes $x^t$ du deuxième jeu d'entraînement sont donc associées aux pseudo-étiquettes, notées $\hat{y}^t$.

Chaque itération comprend ensuite une étape 160, 260b consistant en un entraînement du moteur d'apprentissage, avec le deuxième jeu d'entraînement annoté $\{x^t, \hat{y}^t\}$. Le terme « entraînement » vise ici à différencier cette étape de « l'entraînement préalable », ou initialisation de l'étape 110. Il n'y a cependant qu'une seule étape d'entraînement à chaque itération, l'étape 160. A chaque entrainement, le moteur d'apprentissage peut-être complètement ré-entrainé, ou, de préférence, son entraînement peut être complété (par exemple, dans le cas d'un réseau de neurones, en modifiant les poids obtenus à l'étape précédente).

Dans un ensemble de modes de réalisation de l'invention, l'entraînement du moteur d'apprentissage à l'étape 160 est effectué avec le premier jeu d'entraînement pré-annoté $\{x^S, y^S\}$, et le deuxième jeu d'entraînement annoté $\{x^t, \hat{y}^t\}$. Ceci permet donc d'entraîner le modèle d'apprentissage automatique supervisé, de manière à optimiser l'apprentissage à la fois pour le premier jeu d'entraînement (domaine source), et le deuxième jeu d'entraînement (domaine cible).

La partition des données du deuxième jeu d'entraînement à l'aide d'un algorithme de partitionnement de données dont les paramètres sont optimisés permet d'obtenir des pseudo-étiquettes regroupant les éléments du deuxième jeu d'entraînement en classes cohérentes, et donc de bénéficier d'un entraînement bien adapté au domaine cible.

Enfin, la méthode ne nécessite ni annotation manuelle du deuxième jeu d'entraînement (domaine cible), ni définition manuelle des paramètres de partition optimisés. Elle ne nécessite donc aucune intervention humaine pour adapter l'entraînement au domaine cible.

La méthode selon l'invention permet donc une adaptation efficace de l'entraînement d'un moteur d'apprentissage automatique supervisé d'un domaine source annoté à un domaine cible non annoté, sans besoin d'intervention humaine.

La méthode permet donc un déploiement accéléré du moteur d'apprentissage dans de nouveaux domaines. Par exemple, elle permet un déploiement accéléré de solutions de réidentification humaine dans de nouveaux environnements, tels que de nouveaux systèmes de caméras, ou conditions de prise de vue. Elle permet également de déployer des systèmes de recherche de similarité dans de nouveaux environnements.

Dans un ensemble de modes de réalisation de l'invention, l'entraînement minimise une fonction de perte définie par un terme d'apprentissage de similarité $L_{ID}$ comprenant :

- un terme de classification $L_{cls}^t$ sur le deuxième jeu d'entraînement ;

- un terme de similarité triplet $L_{tri}^t$ sur le deuxième jeu d'entraînement.

Dans un ensemble de modes de réalisation, le terme d'apprentissage de similarité $L_{ID}$ est un terme d'apprentissage sur les deux jeux d'entrainement, et comprend également:

- un terme de classification $L_{cls}^S$ sur le premier jeu d'entraînement ;

- un terme de similarité triplet $L_{tri}^S$ sur le premier jeu d'entraînement.

Les termes de classification $L_{cls}^S$ sur le premier jeu d'entraînement, et de similarité triplet $L_{tri}^S$ sur le premier jeu d'entraînement, regroupés sous le terme de similarité $L_{ID}^S$ , ont déjà été discutés ci-dessus. Les termes de classification $L_{cls}^t$ sur le deuxième jeu d'entraînement, et de similarité triplet $L_{tri}^t$ sur le deuxième jeu d'entraînement, regroupés sous le terme de similarité $L_{IE}^t$ , correspondent à des termes d'entraînement et de similarités similaires à ceux décrits pour le premier jeu d'entraînement, mais appliqués au deuxième jeu d'entraînement, avec les pseudo-étiquettes $\hat{y}^t$.

Les deux termes de classification peuvent correspondre à une même fonction, ou une fonction différente pour les deux jeux d'entraînement. De même, deux termes de similarité peuvent correspondre à une même fonction, ou une fonction différente pour les deux jeux d'entraînement. De préférence, une même fonction sera utilisée pour les deux termes de classification, et une même fonction sera utilisée pour les deux termes de similarités, afin de s'assurer de l'homogénéité des résultats.

Le terme d'apprentissage de similarité $L_{ID}$ sur les deux jeux d'entraînement peut comprendre une somme pondérée des différents termes. Par exemple, la fonction de perte peut s'écrire :

$$L_{ID} = L_{cls}^S + L_{tri}^S + \mu(L_{cls}^t + L_{tri}^t)$$

Où $\mu$ est un terme de pondération des pertes relatives ou premier et deuxième jeu d'entraînement.

Un terme d'apprentissage de similarité comprenant un terme de classification, et un terme de similarité triplet pour le premier et le deuxième jeux d'entraînement respectivement permet donc en même temps de s'assurer que le moteur d'apprentissage supervisé apprend une représentation précise des données, et permet une bonne évaluation de la similarité entre les différentes données rencontrées, et ce à la fois dans le domaine source et le domaine cible.

A chaque itération, l'apprentissage du moteur d'apprentissage automatique supervisé est amélioré : l'apprentissage à l'étape précédente permet un meilleur partitionnement des échantillons du deuxième jeu d'entraînement à l'étape 140, ce qui permet d'obtenir des pseudo-étiquettes $\hat{y}^t$ reflétant un meilleur groupage des échantillons du deuxième jeu d'entraînement, ce qui permet d'améliorer encore l'entraînement du moteur d'apprentissage automatique à l'étape 160.

Selon différents modes de réalisation de l'invention, un nombre différent d'itérations des étapes 120 à 160 peut être effectué. Le nombre d'itérations d'apprentissage peut par exemple être défini par un ou une combinaison des critères suivants :

- un nombre prédéfini d'itérations ;

- une fonction de perte inférieure à un seuil ;
- une différence entre la fonction de perte entre deux itérations successives inférieure à un seuil ;
- etc.

La figure 2b représente un exemple de méthode mise en œuvre par ordinateur d'entrainement d'un moteur d'apprentissage automatique supervisé dans un ensemble de modes de mise en œuvre de l'invention, utilisant un alignement de données entre un domaine cible et un domaine source.

La méthode 200b est similaire à la méthode 200a représentée en figure 2a, à l'exception de l'étape d'entraînement, où l'étape 160 a été remplacée par une étape d'entraînement 260b.

L'étape d'entraînement 260b est spécifique en ce que l'entraînement minimise une fonction de perte comprenant un terme d'alignement, noté $L_{align}$, entre le premier jeu d'entraînement et le deuxième jeu d'entraînement.

Un terme d'alignement peut être ajouté, aux termes déjà discutés pour la fonction de perte de l'entraînement. Par exemple, la fonction de perte à l'étape 260b peut s'écrire :

$$L = L_{cls}^S + L_{tri}^S + \mu(L_{cls}^t + L_{tri}^t) + \eta L_{align}$$

Où $\mu$ et $\eta$ sont des termes de pondération.

Le terme d'alignement $L_{align}$ a pour objectif d'aligner les représentations des premier et deuxième jeux d'entraînement, c'est-à-dire que les distances positives (entre éléments de mêmes classes, définies respectivement par $y^s$ et $\hat{y}^t$), et distance négatives (entre éléments de classes différentes, définies respectivement par $y^s$ et $\hat{y}^t$) soient les mêmes pour les premier et deuxième jeux d'entraînement, dans l'espace latent de caractéristiques. Ceci permet à l'optimisation des paramètres de partitionnement de données optimisés à l'étape 130 d'être bien adaptés au deuxième jeu d'entraînement. Dit autrement, le partitionnement des données optimisé à partir de données annotées du domaine source sera bien adapté aux données du domaine cible, puisque les représentations des deux domaines dans l'espace latent de caractéristiques auront été alignées de manière à ce que les distances positives et négatives soient du même ordre pour les données issues du domaine source et du domaine cible.

Dans un ensemble de modes de réalisation de l'invention, le terme d'alignement est défini par deux termes dits « MMD » (de l'anglais « Maximum Mean Discrepency » , ou « Ecart Moyen Maximal » en français), le terme d'alignement peut alors s'écrire:

$$L_{align} = MMD(S_+^S, S_+^T) + MD(S_-^S, S_-^T)$$

où :

- $S_+^S$ et $S_+^T$ représentent les distributions de distances entre les paires positives, c'est-à-dire les paires de membres appartenant à la même classe, des premier et deuxième jeux d'entraînement respectivement ;
- $S_-^S$ et $S_-^T$ représentent les distributions de distances entre les paires négatives, c'est-à-dire les paires de membres appartenant à des classes différentes, des premier et deuxième jeux d'entraînement respectivement ;
- la fonction MMD entre deux distributions $P = \{x_i\}_{1 \le k \le n}$ et $\{y_i\}_{1 \le k \le m}$ , avec $n, m \in N$ d'échantillons est définie par :

$$MMD(P, Q) = \frac{1}{n^2}\sum_{i=1}^{n}\sum_{j=1}^{n} K(x_i, |x_j) + \frac{1}{m^2}\sum_{i=1}^{m}\sum_{j=1}^{m} K(y_i, |y_j) - \frac{2}{nm}\sum_{i=1}^{n}\sum_{j=1}^{n} K(x_i, |y_j)$$

où :

- K est un noyau, par exemple un noyau gaussien.

Cependant, cette fonction n'est donnée qu'à titre d'exemple on limitatif uniquement de terme d'alignement $L_{align}$, et toute fonction ayant pour effet d'aligner les distances positives et négatives entre les deux jeux d'entraînement dans l'espace de caractéristiques peut être utilisée. Par exemple, les distances CORAL (de l'anglais Correlation Alignment, ou en français alignement de corrélations), Sinkhorn, transport optimal, divergences KL divergence, ou divergence Jensen Shanon peuvent être utilisées.

La figure 2c représente un exemple de méthode mise en œuvre par ordinateur d'entrainement d'un moteur d'apprentissage automatique supervisé par la source et non supervisé par la source dans un ensemble de modes de mise en œuvre de l'invention, utilisant une pondération de données du domaine source en fonction de leur ressemblance avec les données du domaine cible.

La méthode 200c est similaire à la méthode 200b, mais comprend en plus, entre l'étape 120 et l'étape 130, une étape 221c de pondération des poids d'échantillons du jeu de validation pour l'étape 130 d'optimisation de l'au moins une valeur de paramètre de l'algorithme de partitionnement de données.

Cette pondération vise à affecter aux échantillons du jeu de validation un poids croissant en fonction de leur similarité aux échantillons du deuxième jeu d'entraînement.

Dit autrement, plus un échantillon, ou un sous-ensemble d'échantillons, du jeu de validation ressemblera aux échantillons du deuxième jeu d'entraînement, plus il sera pris en compte pour l'optimisation des paramètres de partitionnement à l'étape 130. Selon différents modes de réalisation de l'invention cette pondération peut être obtenue par une ou plusieurs des opérations ci-dessous :

- non-prise en compte à l'étape 130 des échantillons du jeu de validation les plus dissimilaires aux échantillons du deuxième jeu d'entraînement. Dans ce cas, l'étape 130 s'effectue sur la base d'un sous-ensemble d'échantillons du jeu de validation les plus similaires aux échantillons du deuxième jeu d'entraînement ;
- affectation d'un poids de pondération à chaque échantillon retenu du jeu de validation, le poids de pondération croissant avec une mesure de similarité de l'échantillon avec les échantillons du deuxième jeu d'entraînement.

Ceci permet de baser l'optimisation des paramètres de partitionnement sur un ensemble d'échantillons aussi représentatif que possible du deuxième jeu d'entraînement, ce qui permet d'améliorer encore le choix des paramètres.

Dans un ensemble de modes de réalisation de l'invention, l'étape de pondération 221c comprend :

- une séparation du jeu de validation $D_{val}^s$ en plusieurs sous-ensembles. Par exemple, plusieurs sous-ensemble de taille prédéfinie peuvent être obtenus de manière aléatoire ;
- l'affectation d'un coefficient de pondération à chaque sous-ensemble, en fonction d'une indication d'une probabilité d'appartenance d'une matrice de similarités deux à deux du sous-ensemble au premier ou au deuxième jeu d'entraînement, ladite probabilité étant calculée par des réseaux antagoniste génératifs ;

- pour chaque valeur candidate de paramètres de partitionnement d'un ensemble de valeurs candidates :

  ○ le partitionnement de chaque sous-ensemble ;
  ○ le calcul d'un indice de qualité du partitionnement pour chaque sous ensemble ;

- le calcul d'un indice de qualité global du partitionnement, comme une moyenne des indices de qualité du partitionnement pour chaque sous ensemble pondérée par les coefficients de pondération.

Dit autrement, le jeu de validation $D_{val}^s$ est séparé en plusieurs sous-ensembles, en affectant de manière aléatoire les différents échantillons de ce jeu dans chacun des sous-ensembles. La distribution aléatoire des échantillons peut rendre certains sous-ensembles plus proches des données du premier jeu d'entraînement (données source), d'autres plus proches du second jeu d'entraînement (données cible). Afin de quantifier dans quelle mesure chaque sous-ensemble est plutôt proche des données du premier jeu ou du second jeu, une matrice de similarité deux à deux des échantillons de chaque sous-ensemble est construite. Cette matrice est obtenue en calculant les similarités deux à deux de chaque paire d'échantillon d'un sous-ensemble. Des réseaux antagonistes génératifs sont entraînés sur les caractéristiques des premier et deuxième jeux, extraites à l'étape 120 (plus spécifiquement, sur des matrices de similarités deux à des caractéristiques issues de l'encodage des premier et deuxième jeux d'entraînement à l'étape 120). Ces réseaux antagonistes génératifs permettent donc d'indiquer, pour une matrice de similarité donnée, une probabilité qu'elle appartienne plutôt au deuxième jeu, ou plutôt au premier. Plus la probabilité d'appartenance d'un sous-ensemble au deuxième jeu est forte, plus il bénéficiera d'un coefficient de pondération élevé. Ainsi, les données les plus ressemblantes aux données du deuxième jeu auront plus d'impact sur le calcul du paramètre optimisé, ce qui permet d'obtenir un partitionnement de données mieux adapté au deuxième jeu d'entraînement.

Ensuite, un ensemble de paramètres candidats sont testés: pour chaque paramètre ou jeu de paramètres candidat, tous les sous-ensembles sont partitionnés avec le ou les paramètres candidats, et un indice de qualité du partitionnement, comme par exemple l'ARI évoqué plus haut, est calculé pour l'ensemble. Enfin, un indice de qualité global est calculé comme la moyenne des indices pour chaque sous-ensemble pondérés par les coefficients de pondération des sous-ensembles. Le paramètre ou jeu de paramètres candidat ayant l'indice de qualité le plus favorable peut alors être sélectionné.

Ceci permet donc de déterminer un paramètre, ou jeu de paramètres, en prenant plus en compte les échantillons les plus proches du deuxième jeu d'entraînement, et donc de disposer d'un partitionnement de données mieux adapté aux données du deuxième jeu d'entraînement.

Dans un ensemble de modes de réalisation de l'invention, ceci est remplacé par l'utilisation pour la fonction de perte d'un terme d'alignement, comme décrit en référence à la figure 2b.

La figure 3 représente un exemple de méthode mise en œuvre par ordinateur d'utilisation d'un moteur d'apprentissage automatique supervisé dans un ensemble de modes de mise en œuvre de l'invention.

La méthode 300 comprend une première étape 310 de réception d'un échantillon de données brutes. Cette étape consiste, en pratique, à recevoir un échantillon de données du même type que les données utilisées pour l'entraînement. Par exemple, cette étape peut consister à recevoir un fichier multimédia, ou une image, si le moteur d'apprentissage automatique supervisé est configuré pour traiter ces données.

La méthode 300 comprend ensuite une deuxième étape 320 d'extraction, par ledit moteur, de caractéristiques à partir de cet échantillon de données brutes.

Cette étape 320 correspond à un encodage des données brutes en données caractéristiques dans l'espace latent. Par exemple, si le moteur d'apprentissage automatique supervisé est un réseau de neurones artificiels, cette étape consiste à appliquer le réseau de neurones artificiel pour obtenir un vecteur de caractéristiques associé à l'entrée.

Les données caractéristiques peuvent ensuite être utilisées, en fonction de l'objectif servi par le moteur d'apprentissage automatique supervisé.

Par exemple, un classificateur peut être appliqué aux données caractéristiques, pour classifier l'entrée dans une ou plusieurs classes.

Comme indiqué ci-dessus, l'invention est particulièrement adaptée aux tâches de mesures de similarités, par exemple pour des applications de recherche d'information. Dans des modes de réalisation relatifs à une mesure de similarité entre deux échantillons, la méthode 300 est appliquée à deux échantillons distincts, puis une mesure de similarité peut être appliquée aux deux échantillons.

Selon différents modes de réalisation de l'invention, la mesure de similarité peut être de différents types. Par exemple, il peut s'agir d'une distance euclidienne, ou d'une autre mesure de similarité, comme par exemple la similarité cosinus ou la distance de Jaccard.

Une telle mesure de similarité peut être appliquée à de nombreux types de données telles que des données multimédia, des images, sons, vidéos, textes, etc...

Ceci peut être utilisé dans de nombreuses applications.

Dans des applications de recherche d'information, ceci peut permettre d'ordonnancer des résultats de recherche. Par exemple, ceci peut être utilisé pour une recherche d'information dans le cadre de données image : les similarités peuvent être calculées entre les caractéristique d'une image cible fournie par un utilisateur, et les caractéristiques d'images d'une banque de données, les résultats images étant alors présentés du plus au moins similaire.

Dans une application de réidentification de personnes, les caractéristiques d'une image de vidéosurveillance représentant une personne inconnue peuvent être comparées aux caractéristiques d'images représentant différentes personnes connues. Les mesures de similarité peuvent alors être utilisées pour identifier les candidats les plus probables pour identifier la personne inconnue.

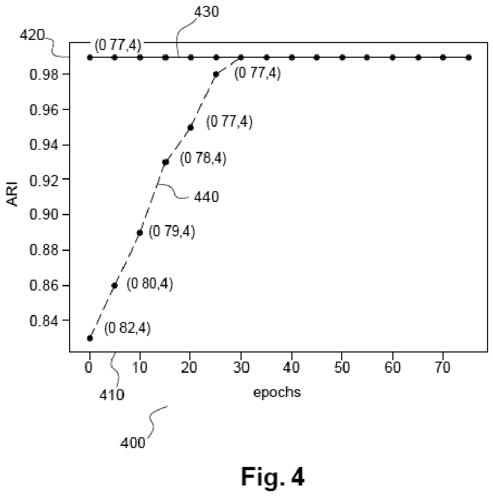

La figure 4 représente un exemple d'évolution d'une mesure de calcul d'une qualité de partitionnement de données en fonction d'un nombre d'itérations d'entraînement, dans un ensemble de modes de réalisation de l'invention.

Le graphe 400 représente l'évolution d'une mesure de qualité du partitionnement, calculé à l'étape 130, en fonction du nombre d'itérations d'apprentissage.

L'axe horizontal 410 représente le nombre d'itérations d'apprentissage, exprimé en épochès.

L'axe vertical 420 représente la métrique de qualité de partitionnement. Ici, la métrique utilisée est l'ARI présenté ci-dessus. Plus sa valeur est élevée, meilleure est la qualité du partitionnement.

La courbe 430 représente une valeur cible de validation du deuxième jeu de données d'entraînement. Il s'agit ici d'une valeur fixe en fonction du nombre d'itérations, puisqu'il s'agit de l'ARI optimal pour ce jeu. Cette valeur représente une valeur optimale sur un jeu de données cible test annotées.

La courbe 440 représente l'évolution de la métrique ARI, telle que mesurée à l'étape 130, en fonction du nombre d'itération d'entraînement.

Le graphe 400 montre que la métrique ARI augmente rapidement en fonction du nombre d'itérations d'entraînement, jusqu'à atteindre l'objectif de validation après 30 epochs environ.

Ceci montre donc que l'invention permet d'optimiser le partitionnement des données du deuxième jeu d'entraînement, et permet ainsi un pseudo-étiquetage de plus en plus précis des données du domaine cible.

Les exemples ci-dessus démontrent la capacité de l'invention à adapter l'entraînement d'un moteur d'apprentissage automatique supervisé d'un domaine source annoté à un domaine cible non annoté. Ils ne sont cependant donnés qu'à titre d'exemple et ne limitent en aucun cas la portée de l'invention, définie dans les revendications ci-dessous.

**Revendications**

1. Méthode mise en œuvre par ordinateur (100, 200a, 200b, 200c) d'entraînement d'un moteur d'apprentissage automatique supervisé d'extraction de caractéristiques de données multimédia, comprenant :

 - une initialisation (110) du moteur d'apprentissage ;
 - puis, une pluralité d'itérations des étapes suivantes :

   ◦ une extraction de caractéristiques (120), par le moteur d'apprentissage, d'un deuxième jeu de données multimédia d'entraînement non annoté, et d'un jeu de validation pré-annoté associé à un premier jeu de données multimédia d'entraînement pré-annoté ;
   ◦ une optimisation (130) d'au moins une valeur de paramètre d'un algorithme de partitionnement de données appliqué aux caractéristiques extraites du jeu de validation, en fonction d'étiquettes associées au jeu de validation ;
   ◦ une application (140) dudit algorithme de partitionnement avec l'au moins une valeur de paramètre de données aux caractéristiques extraites du deuxième jeu d'entraînement ;
   ◦ une annotation automatique (150) du deuxième jeu d'entraînement, à l'aide d'une pluralité d'étiquettes, ou pseudo-étiquettes, chaque étiquette de ladite pluralité correspondant à une partition générée par ladite application ;
   ◦ un entraînement (160, 260b) du moteur d'apprentissage, avec le deuxième jeu d'entraînement annoté.

2. Méthode selon la revendication 1, dans laquelle ledit entraînement du moteur d'apprentissage est effectué avec le premier jeu d'entraînement pré-annoté, et le deuxième jeu d'entraînement annoté.

3. Méthode selon l'une quelconque des revendications précédentes, dans laquelle ladite initialisation consiste en un entraînement préalable du moteur d'apprentissage à partir dudit premier jeu d'entraînement pré-annoté.

4. Méthode selon la revendication 3, dans laquelle l'entraînement préalable minimise une fonction de perte comprenant un terme d'apprentissage de similarité.

5. Méthode selon l'une quelconque des revendications précédentes, dans laquelle ladite optimisation de l'au moins une valeur de paramètre d'un algorithme de partitionnement de données consiste à calculer l'au moins une valeur de paramètre améliorant la similarité entre les partitions générées par l'algorithme de partitionnement, et les partitions induites par les étiquettes associées au jeu de validation.

6. Méthode selon l'une quelconque des revendications précédentes, dans laquelle l'entraînement optimise un terme d'apprentissage de similarité comprenant :

 - un terme de classification sur le deuxième jeu d'entraînement ;
 - un terme de similarité sur le deuxième jeu d'entraînement.

7. Méthode selon la revendication 6, dans laque le terme d'apprentissage de similarité comprend également :

 - un terme de classification sur le premier jeu d'entraînement ;
 - un terme de similarité sur le premier jeu d'entraînement.

8. Méthode selon l'une quelconque des revendications précédentes, dans laquelle l'entraînement minimise une fonction de perte comprenant un terme d'alignement entre le premier jeu d'entraînement et le deuxième jeu d'entraînement.

9. Méthode selon l'une quelconque des revendications précédentes, comprenant une étape (221c) de pondération des poids d'échantillons du jeu de validation pour ladite optimisation de l'au moins une valeur de paramètre de l'algorithme de partitionnement de données, pour affecter auxdits échantillons du jeu de validation un poids croissant en fonction de leur similarité aux échantillons du deuxième jeu d'entraînement.

10. Méthode selon la revendication 9, dans laquelle ladite étape de pondération comprend :

 - une séparation du jeu de validation en plusieurs sous-ensembles ;
 - une affectation d'un coefficient de pondération à chaque sous-ensemble, en fonction d'une indication d'une probabilité d'appartenance d'une matrice de similarités deux à deux du sous-ensemble au premier ou au deuxième jeu d'entraînement, ladite probabilité étant calculée par des réseaux antagoniste génératifs ;
- pour chaque valeur candidate de paramètres de partitionnement d'un ensemble de valeurs candidates :

    o le partitionnement de chaque sous-ensemble ;
    o le calcul d'un indice de qualité du partitionnement pour chaque sous ensemble ;
    ◦ le calcul d'un indice de qualité global du partitionnement, comme une moyenne des indices de qualité du partitionnement pour chaque sous ensemble pondérée par les coefficients de pondération.

11. Moteur d'apprentissage automatique supervisé d'extraction de caractéristiques de données multimédia entraîné par la méthode selon l'une des revendications 1 à 10.

12. Méthode (300) d'utilisation d'un moteur d'apprentissage automatique supervisé d'extraction de caractéristiques de données multimédia selon la revendication 11, comprenant :

    - la réception (310) d'un échantillon de données mutlimédia brutes ;
    - l'extraction (320), par ledit moteur, de caractéristiques à partir de cet échantillon de données multimédia brutes.

13. Produit programme d'ordinateur comprenant des instructions de code informatique qui, lorsque le programme est exécuté sur un ordinateur, conduisent celui-ci à exécuter la méthode selon l'une des revendications 1 à 10 et 12.

14. Système de traitement de données comprenant un processeur configuré pour mettre en œuvre la méthode selon l'une des revendications 1 à 10 et 12.

15. Support d'enregistrement lisible par ordinateur comprenant des instructions qui, lorsqu'elles sont exécutées par un ordinateur, conduisent celui-ci à mettre en œuvre la méthode selon l'une des revendications 1 à 10 et 12.

```
┌─────────────────────────────┐
│        Initialisation        │──110
└─────────────────────────────┘
              │
              ▼
┌─────────────────────────────┐
│  Extraction de caractéristiques│──120
│ du deuxième jeu et jeu de validation│
└─────────────────────────────┘
              │
              ▼
┌─────────────────────────────┐
│    Optimisation paramètre     │──130
│  algorithme de partitionnement │
└─────────────────────────────┘
              │
              ▼
┌─────────────────────────────┐
│   Partitionnement de données  │──140
└─────────────────────────────┘
              │
              ▼
┌─────────────────────────────┐
│    Annotation du deuxième jeu │──150
└─────────────────────────────┘
              │
              ▼
┌─────────────────────────────┐
│  Entraînement avec le premier │──160
│   et le deuxième jeux annotés │
└─────────────────────────────┘
```

100

## Fig. 1

**Fig. 2a**

**Fig. 2b**

**Fig. 2c**

**Fig. 3**

Fig. 4

Europäisches
Patentamt

European
Patent Office

Office européen
des brevets

# RAPPORT DE RECHERCHE EUROPEENNE

**Numéro de la demande**

**EP 22 17 6506**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/143229 A1 (VAN DER MADE PETER AJ [US] ET AL) 7 mai 2020 (2020-05-07) * alinéa [0130] – alinéa [0163] * * figures 8-16 * ----- | 1-15 | INV. G06N3/04 G06N3/08 |
| A | US 2019/012581 A1 (HONKALA MIKKO [FI] ET AL) 10 janvier 2019 (2019-01-10) * alinéa [0033] – alinéa [0086] * * figures 2a-7 * ----- | 1-15 | |

**DOMAINES TECHNIQUES RECHERCHES (IPC)**

**G06N**

Le présent rapport a été établi pour toutes les revendications

| Lieu de la recherche | Date d'achèvement de la recherche | Examinateur |
|---|---|---|
| **La Haye** | **21 octobre 2022** | **Baldan, Marco** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 22 17 6506**

**21−10−2022**

| Document brevet cité au rapport de recherche | Date de publication | Membre(s) de la famille de brevet(s) | Date de publication |
|---|---|---|---|
| US 2020143229 A1 | 07−05−2020 | AU 2019372063 A1 | 10−06−2021 |
| | | AU 2021254524 A1 | 11−11−2021 |
| | | CN 111417963 A | 14−07−2020 |
| | | CN 113537471 A | 22−10−2021 |
| | | EP 3874411 A1 | 08−09−2021 |
| | | JP 2022509754 A | 24−01−2022 |
| | | KR 20210098992 A | 11−08−2021 |
| | | US 2020143229 A1 | 07−05−2020 |
| | | WO 2020092691 A1 | 07−05−2020 |
| US 2019012581 A1 | 10−01−2019 | AUCUN | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ESTER, M. ; KRIEGEL, H. P. ; SANDER, J. ; XU, X.** *Density-Based Spatial Clustering of Application with Noise,* Août 1996
- A density-based algorithm for discovering clusters in large spatial databases with noise. *Kdd,* vol. 96 (34), 226-231
- **HERMANS, A. ; BEYER, L. ; LEIBE, B.** In defense of the triplet loss for person re-identification. *arXiv:1703.07737,* 2017